# EUROPEAN PATENT SPECIFICATION

(11) **EP 2 515 628 B1**
(45) Date of publication and mention of the grant of the patent: **04.11.2015**
(21) Application number: 10809091.1
(22) Date of filing: 23.12.2010
(51) Int. Cl.: A01G 23/081

(54) **HEAD FOR HARVESTING OF TREES AND VEHICLE PROVIDED WITH SUCH A HEAD**
AUFSATZ ZUR BAUMERNTE UND FAHRZEUG MIT DIESEM AUFSATZ
TÊTE DE COUPE D'ARBRES ET VÉHICULE ÉQUIPÉ D'UNE TÊTE DE CE TYPE

(30) Priority: 23.12.2009 NL 1037584; 15.02.2010 NL 1037718
(43) Date of publication of application: 31.10.2012
(73) Proprietor: Gierkink, Michel Bernardus Johanna, 7134 RJ Vragender (NL)
(72) Inventor: Gierkink, Michel Bernardus Johanna, 7134 RJ Vragender (NL)
(74) Representative: Mink-Lindenburg, Charlotte Hildegard
(86) International application number: PCT/NL2010/050883
(87) International publication number: WO 2011/078673

(56) References cited:
- US-A- 4 175 598
- US-B1- 6 374 877
- US-B1- 6 408 906

## Description

The invention relates to a hydraulically controlled head for harvesting trees, comprising a clamp which can be placed round a tree and a first hydraulic actuator with which the clamp can be closed and reopened, and a double-action hydraulic valve with which the head can be connected to a hydraulic pump unit forming part of a vehicle which can position the head. The vehicle is generally provided here with a long, articulated arm so that a previously sawn-off trunk can be picked up from a path out of a wood and can be displaced to the path. The trunk can then be added to other trunks.

The drawback of such a known head, as disclosed, for example, in US 6 408 906 B1, is that sawing must take place beforehand, which takes time and entails risks. The head according to the invention obviates this drawback and has the feature that the head also comprises a tilting device provided with a second hydraulic actuator and a saw provided with a hydraulic motor, that a first hydraulic sequencing valve is received between the second hydraulic actuator and the hydraulic valve, and that a second hydraulic sequencing valve is received between the hydraulic motor and the hydraulic valve. It is then possible to grip a tree trunk with the clamp, saw through the tree trunk, displace it to the path and stack it there. The inventive head can be utilized particularly advantageously to harvest trees forming part of windbreaks and trees along roads, which are often difficult to reach due to the presence of fences and ditches. By applying hydraulic sequencing valves it is moreover possible to operate the tilting device and the hydraulic motor by increasing the hydraulic pressure. More particularly it is then not necessary to add additional conduits and an extra hydraulic valve, so that the inventive head can be mounted on existing vehicles in simple manner.

A very favourable embodiment has the feature that a connection to the hydraulic valve comprises a first pressure line for opening the clamp and a second pressure line for closing the clamp, that the first sequencing valve is connected to the first pressure line and that the second sequencing valve is connected to the second pressure line. The tilting device can then be operated by making the pressure in the first pressure line sufficiently high, and the hydraulic motor can be operated by making the pressure in the second pressure line sufficiently high.

A further favourable embodiment has the feature that the second hydraulic actuator is provided with a first throttle non-return valve so that when the pressure falls away in the first pressure line the head can automatically return to its vertical starting position.

A further favourable embodiment has the feature that the hydraulic motor is adapted to cause a chainsaw to rotate around a saw blade and is provided with an inlet port, an outlet port and a drain port. The outlet port and the drain port are preferably each connected here via a non-return valve to the first pressure line, while the drain port is moreover preferably provided with a first hydraulic accumulator to protect the hydraulic motor against pressure peaks in the first pressure line during the sawing.

A further favourable embodiment which makes it possible to utilize a relatively simple and light saw blade has the feature that the head comprises a third hydraulic actuator for causing the saw blade to move out of a saw casing.

A further favourable embodiment has the feature that the outlet port of the hydraulic motor is provided with a hydraulic throttle control valve, whereby a pressure which can control the third hydraulic actuator is built up during rotation of the saw. The third hydraulic actuator more particularly comprises a double-action hydraulic cylinder connected to the outlet port of the hydraulic motor and, via a second throttle non-return valve, to a second hydraulic accumulator which feeds back the oil to the third actuator so that the saw blade returns to its starting position in the saw casing when the pressure falls away.

A further favourable embodiment has the feature that the head also comprises a hydraulic lubricant pump for lubricating the saw blade, connected to the outlet port of the hydraulic motor. Use is advantageously made here of the fact that, by applying the throttle control valve, the pressure at the outlet port of the hydraulic motor increases during sawing.

A further favourable embodiment, wherein the number of hydraulic lines required can be significantly limited, has the feature that the hydraulic head also comprises a hydraulic control unit suitable for controlling the second hydraulic actuator, the third hydraulic actuator and the hydraulic motor. At least the first sequencing valve, the second sequencing valve, the first throttle control valve, the throttle non-return valve, the first non-return valve and the second non-return valve can here preferably be accommodated in a solid metal body.

A favourable alternative embodiment of the inventive head has the feature that the head also comprises an additional clamp provided with an additional hydraulic actuator for clamping round already harvested trees when a further tree is being sawn down. The inventive head can particularly advantageously be utilized to harvest trees forming part of windbreaks and trees along roads, which are often difficult to reach due to the presence of fences and ditches. The additional clamp makes it possible here to fell, collect and remove a plurality of small trees in one work operation.

A very favourable embodiment of the inventive head has the feature that a first hydraulic sequencing valve is received between the second hydraulic actuator and the hydraulic valve and a second hydraulic sequencing valve is received between the hydraulic motor plus the additional hydraulic actuator and the hydraulic valve. It is then possible to operate the tilting device and the hydraulic motor and the additional hydraulic actuator by increasing the hydraulic pressure. It is then more particularly not necessary to add extra conduits and an extra hydraulic valve, so that the inventive head can be mounted on existing vehicles in simple manner.

A further favourable embodiment has the feature that a connection to the hydraulic valve comprises a first pressure line for opening the clamp and a second pressure line for closing the clamp, that the first sequencing valve is connected to the first pressure line and that the second sequencing valve is connected to the second pressure line. The tilting device can then be operated by making the pressure in the first pressure line sufficiently high, and the hydraulic motor and/or the additional hydraulic actuator can be operated by making the pressure in the second pressure line sufficiently high.

A further favourable embodiment has the feature that the outlet of the second sequencing valve is connected to the hydraulic motor and to an inlet of a hydraulic 3/2 valve. A first connection of the additional hydraulic actuator is preferably connected here to an outlet of the hydraulic 3/2 valve so that the additional hydraulic actuator can be controlled at a suitable moment, wherein the two jaw halves of the additional clamp move apart.

A further favourable embodiment has the feature that an outlet port of the hydraulic motor is provided with a hydraulic throttle control valve. The outlet port of the hydraulic motor is preferably connected here to a hydraulically operated switch input of the hydraulic 3/2 valve so that the two jaw halves of the additional clamp move apart during the sawing.

A further favourable embodiment has the feature that the additional hydraulic actuator comprises two sub-actuators connected in parallel for operating two jaw halves of the additional clamp, this enabling a compact and light construction.

A further favourable embodiment has the feature that a second connection of the additional hydraulic actuator is connected to a hydraulic accumulator. The hydraulic accumulator can be held at a suitable pre-pressure so that the two jaw halves remain closed until the additional hydraulic actuator is controlled.

A further very favourable embodiment has the feature that the second hydraulic actuator is provided with a pressure relief valve. It is then possible to harvest and collect a number of trees using the additional clamp, wherein the clamp automatically rotates into a transporting position at a predetermined loading of the tilting mechanism.

A further favourable embodiment, wherein the number of hydraulic lines required can be significantly limited, has the feature that the hydraulic head also comprises a hydraulic control unit suitable for controlling the second hydraulic actuator, the third hydraulic actuator and the hydraulic motor. At least the first sequencing valve, the second sequencing valve, the first throttle control valve, the throttle non-return valve, the first non-return valve, the second non-return valve and the pressure relief valve are preferably accommodated here in a solid metal body.

The invention also relates to a vehicle provided with a hydraulically controlled head as specified in the foregoing paragraphs.

The invention will now be further elucidated with reference to the following figures, in which:
- Fig. 1: shows schematically a vehicle provided with a head according to the invention;
- Fig. 2A: shows a schematic bottom view of a possible embodiment of a head according to the invention;
- Fig. 2B: shows schematically the head with outward extended saw;
- Fig. 3A: shows a schematic side view of the head shortly after a tree has been sawn off;
- Fig. 3B: shows schematically the head during transport of the sawn-off tree;
- Fig. 4: shows schematically a possible embodiment of a hydraulic control for the head;
- Fig. 5A: shows a schematic top view of a head provided with an additional clamp;
- Fig. 5B: shows a schematic side view of the head;
- Fig. 6: shows schematically a possible embodiment of a hydraulic control for the head provided with an additional clamp.

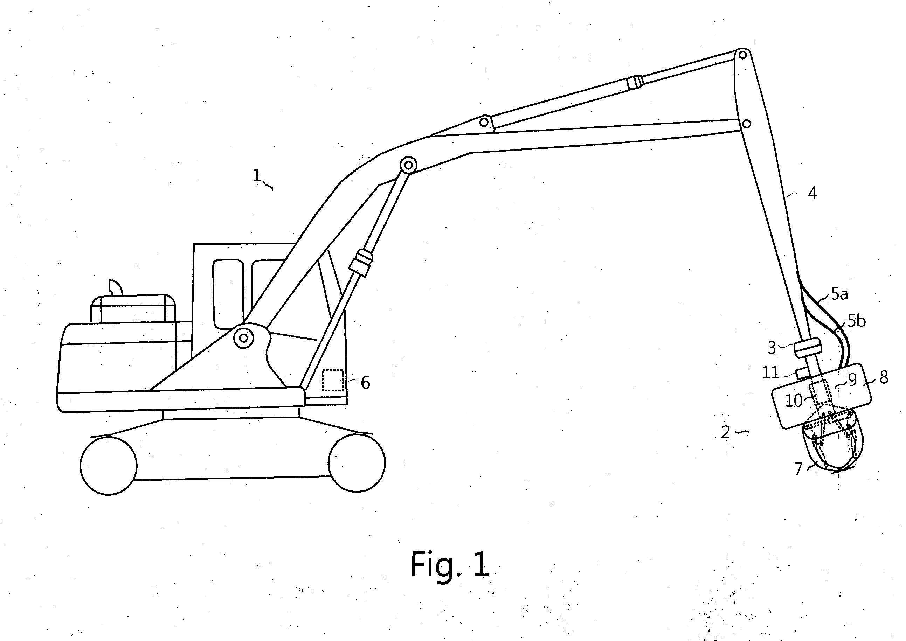

Fig. 1 shows schematically a vehicle 1 provided with a head 2 according to the invention. Head 2 is mounted on a hydraulic rotary coupling 3 forming part of vehicle 1 such that head 2 can be rotated around the longitudinal axis of an arm 4. Available for operation of head 2 are a first pressure line 5a and a second pressure line 5b connected to a double-action valve 6 forming part of vehicle 1. Head 2 consists of a clamp 7, a saw casing 8 and a tilting mechanism 9 provided with a second hydraulic actuator 10 for the purpose of tilting clamp 7 and saw casing 8 perpendicularly of the longitudinal axis of arm 4, and a hydraulic control 11. Using hydraulic control 11 the driver of vehicle 1 can open clamp 7, tilt it horizontally using second hydraulic actuator 10, place it around a tree trunk, close clamp 7, saw through the tree trunk and then tilt clamp 7 vertically using second hydraulic actuator 10. Using the provisions of vehicle 1 the tree can then be placed on for instance a trailer, after which clamp 7 is opened. It is also possible to first lay the tree on the ground and divide the tree trunk into pieces, after which the pieces can be placed on the trailer.

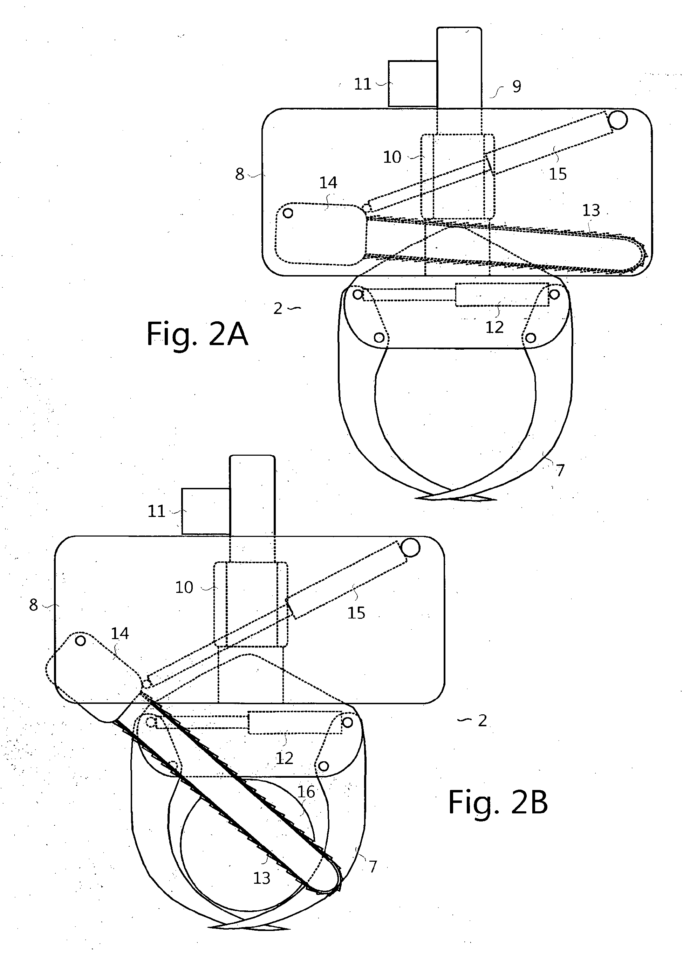

Fig. 2A shows a schematic bottom view of a possible embodiment of a head 2 according to the invention, consisting of a clamp 7 provided with a second hydraulic actuator 10 forming part of a tilting mechanism 9 which in an operative mode is connected to the hydraulic rotary coupling 3 (not shown in this figure), and a saw casing 8 in which is accommodated a chainsaw 13 provided with a hydraulic motor 14, and with a third hydraulic actuator 15 which can press chainsaw 13 out of saw casing 8. Fig. 2B shows schematically the head during sawing, wherein using third hydraulic actuator 15 the chainsaw 13 driven by hydraulic motor 14 is pressed through a tree trunk 16 situated in clamp 7.

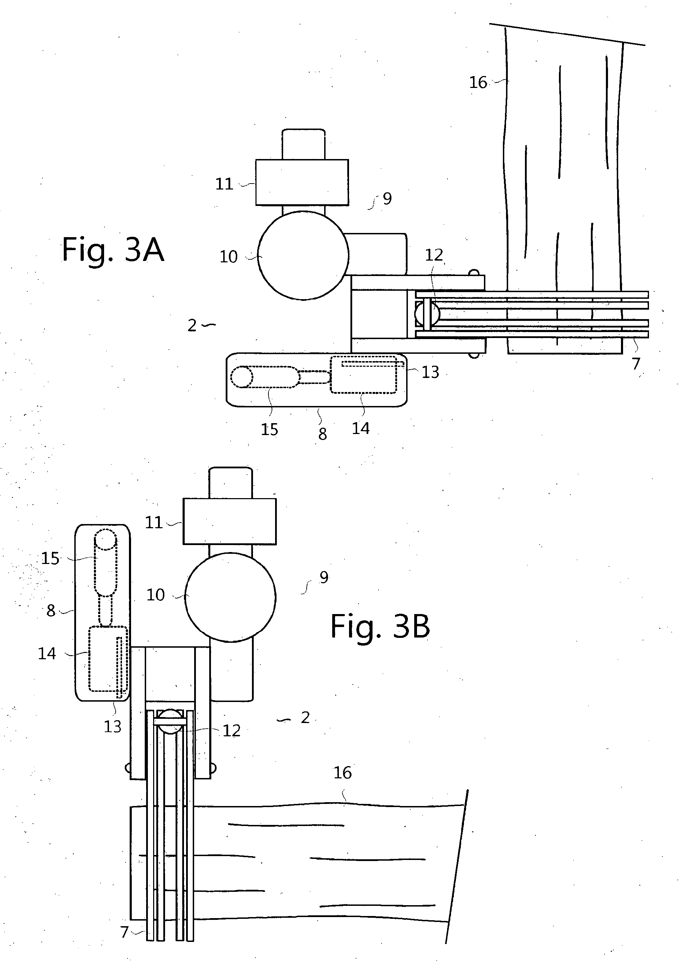

Fig. 3A shows a schematic side view of head 2 shortly after tree trunk 16 has been sawn off, wherein clamp 7 is rotated into a horizontal position using second hydraulic actuator 10. Fig. 3B shows schematically head 2 during transport of the sawn-off tree trunk 16, wherein clamp 7 is rotated into a vertical position using second hydraulic actuator 10.

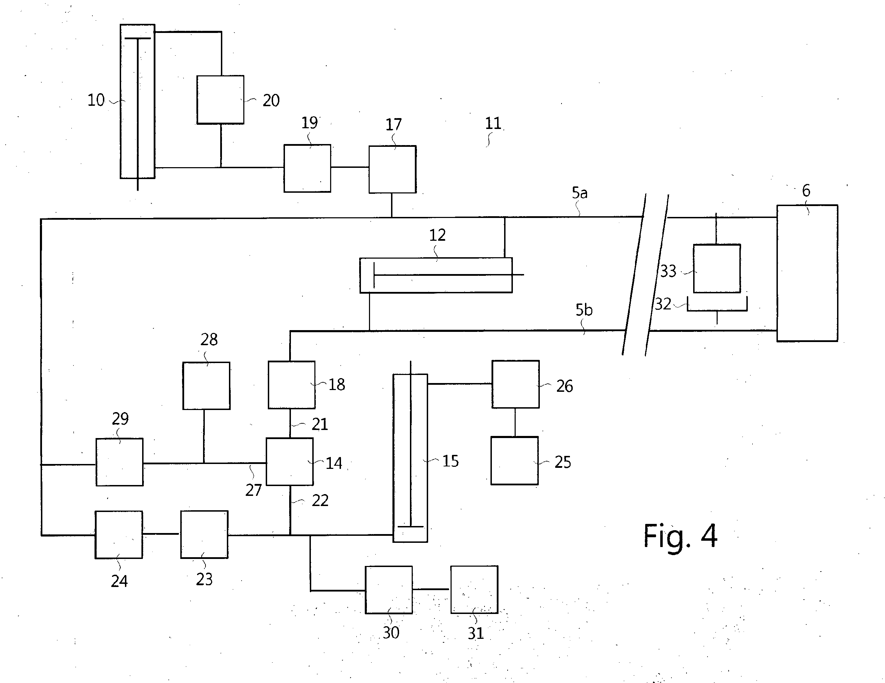

Fig. 4 shows schematically a possible embodiment of a hydraulic control 11 for the head, with first pressure line 5a and second pressure line 5b which come from double-action hydraulic valve 6 and which are adapted in the first instance to operate the first hydraulic actuator 12 which can open and close clamp 7. In order to realize this the driver allows the pressure in one of the pressure lines to rise to for instance 100 bar. Connected according to the invention to first pressure line 5a is a first sequencing valve 17 which makes it possible to operate hydraulic actuator 10 by allowing the pressure in first pressure line 5a to rise higher. Further connected to second pressure line 5b is a second sequencing valve 18 which makes it possible to operate hydraulic motor 14 by allowing the pressure in second pressure line 5b to rise higher. If the driver does not allow the pressure in first pressure line 5a and in second pressure line 5b to rise higher than for instance 100 bar, clamp 7 can then be used normally and first sequencing valve 17 and second sequencing valve 18 remain closed.

When hydraulic valve 6 is set such that the pressure in first pressure line 5a rises, clamp 7 is opened. If the pressure subsequently rises higher than for instance 100 bar, first sequencing valve 17 then opens and oil can flow to hydraulic actuator 10 via a first throttle control valve 19, whereby clamp 7 is rotated in stages into the horizontal position. When hydraulic valve 6 is subsequently switched over, the pressure in first pressure line 5a then falls and the pressure in second pressure line 5b increases, whereby clamp 7 will close. Oil can also flow out of hydraulic actuator 10 via a throttle non-return valve 20 so that clamp 7 can rotate to the vertical position.

If the pressure in second pressure line 5b rises higher than for instance 100 bar, second sequencing valve 18 then opens and oil can flow to inlet port 21 of hydraulic motor 14, whereby chainsaw 13 is set into motion. The oil flows to first pressure line 5a via an outlet port 22 and via a second throttle control valve 23 and a first non-return valve 24. The pressure at outlet port 22 of hydraulic motor 14 will rise due to the presence of throttle control valve 23. This pressure is utilized to control third hydraulic actuator 15, whereby chainsaw 13 is pressed out of saw casing 8. The pressure in hydraulic actuator 10 has meanwhile fallen so much that, after being sawn through, the tree rotates into a horizontal position.

In order to press back the third hydraulic actuator 15 a hydraulic accumulator 25 is also provided, which comes into operation as soon as second sequencing valve 18 closes. If desired, an adjustable throttle non-return valve 26 can be received between third hydraulic actuator 15 and hydraulic accumulator 25, which valve can be adjusted such that chainsaw 13 remains outside saw casing 8 and the chain can be replaced.

Hydraulic motor 14 is generally provided with a drain port 27 to protect the hydraulic motor against pressure peaks in the first pressure line during sawing. Provided for the purpose of discharging the drain oil are a second hydraulic accumulator 28 and a second non-return valve 29, via which the oil is fed back to first pressure line 5a.

At outlet port 22 of hydraulic motor 14 the pressure increases each time sawing is started. A per se known hydraulic saw lubricant pump 30, which pumps chain lubricant out of a reservoir 31 and drips it onto chainsaw 13, can therefore be connected to outlet port 22.

When pressure lines 5a,5b are not operated they are generally blocked. In order to allow run-off to an oil reservoir 32 of vehicle 1 of the oil from actuator 10 and the drain oil from hydraulic motor 14, which is temporarily stored in accumulator 28, and the oil from third actuator 15, there is preferably mounted in first pressure line 5a a hose rupture protection 33 which blocks as soon as hydraulic valve 6 is switched over.

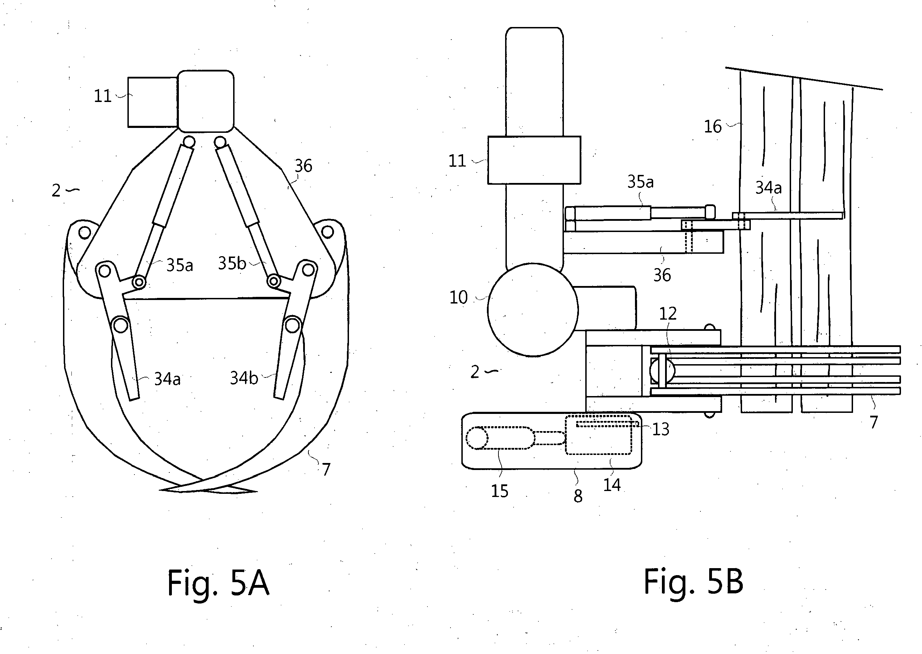

Fig. 5A shows a schematic top view of a head provided with an additional clamp, wherein saw casing 8 is omitted for the sake of clarity. The additional clamp consists of two clamp halves 34a,34b which are controlled by an additional actuator, which in the embodiment shown here consists of two sub-actuators 35a,35b. The whole is constructed on an additional platform 36 mounted above actuator 10. Clamp halves 34a,34b can hold a number of trunks at the moment clamp 7 is opened to clamp round and saw off another trunk. Clamp halves 34a,34b take an articulated form so that the outer ends can move apart when an additional trunk must be gripped.

Fig. 5B shows a schematic side view of this head, with clamp half 34a, sub-actuator 35a, platform 36, actuator 10 and already sawn-off trunks 16 which are held in place by clamp halves 34a,34b at the moment clamp 7 is opened.

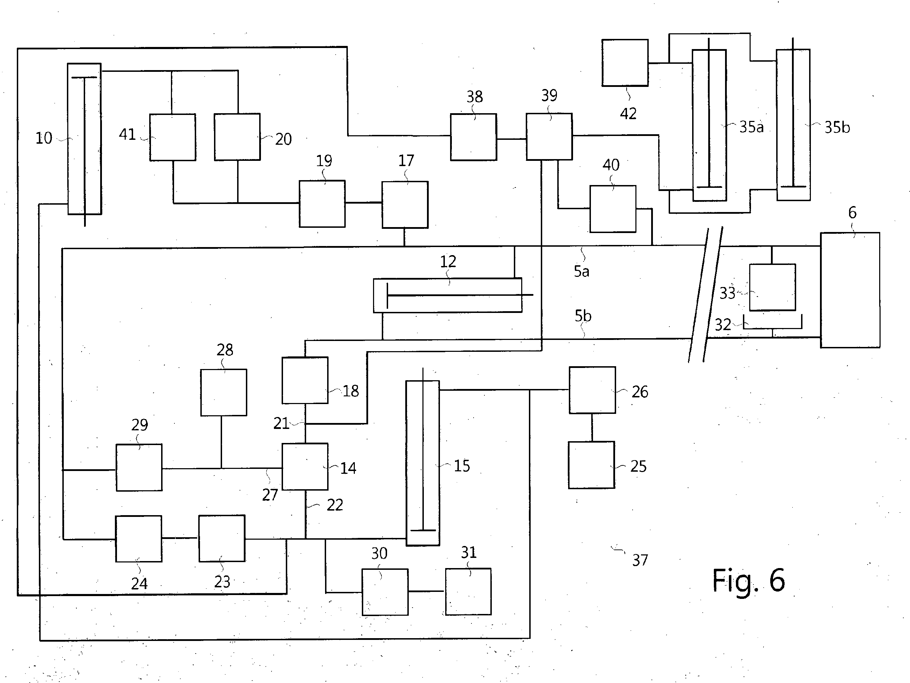

Fig. 6 shows schematically a possible embodiment of a hydraulic control 37 for the head provided with an additional clamp, which embodiment substantially corresponds to hydraulic control 11 as described with reference to Fig. 4, but to which a control for sub-actuators 35a, 35b is added. Arranged for this control is a hydraulic 3/2 valve 39, the supply port of which is connected to the outlet of second sequencing valve 18. The switch port is connected via a throttle non-return valve 38 to the outlet of hydraulic motor 14, where a pressure builds up during sawing. The exhaust port of hydraulic 3/2 valve 39 is connected via a non-return valve 40 to first pressure line 5a. The result is that clamp halves 34a,34b open during sawing so that the trunk being sawn through at that moment can be enclosed. When sawing stops, clamp halves 34a, 34b will then close slowly because hydraulic oil flows away via throttle non-return valve 38. A driver can then place the felled trees in a transporting position or cut down another tree. In order to prevent the head being loaded too heavily, a pressure relief valve 41 is added which lies in parallel with throttle non-return valve 20. When the pressure on hydraulic actuator 10 rises too high, pressure relief valve 41 then opens and the head is automatically rotated into the transporting position. Finally, another hydraulic accumulator 42 is added which is set to a predetermined pressure of for instance 15 mPa and which ensures that clamp halves 34a,34b remain closed when no sawing is taking place.

## Claims

1. Hydraulically controlled head (2) for harvesting trees, comprising a clamp (7) which can be placed round a tree and a first hydraulic actuator (12) with which the clamp can be closed and reopened, and a double-action hydraulic valve (6) with which the head can be connected to a hydraulic pump unit forming part of a vehicle (1) which can position the head, whereby the head also comprises a tilting device (9) provided with a second hydraulic actuator (10) and a saw (13) provided with a hydraulic motor (14), **characterized in that** a first hydraulic sequencing valve (17) is received between the second hydraulic actuator and the hydraulic valve, and that a second hydraulic sequencing valve (18) is received between the hydraulic motor and the hydraulic valve.

2. Hydraulically controlled head as claimed in claim 1, **characterized in that** a connection to the hydraulic valve comprises a first pressure line (5a) for opening the clamp (7) and a second pressure line (5b) for closing the clamp, that the first sequencing valve (17) is connected to the first pressure line and that the second sequencing valve (18) is connected to the second pressure line.

3. Hydraulically controlled head as claimed in claim 2, **characterized in that** the second hydraulic actuator (10) is provided with a first throttle non-return valve (20).

4. Hydraulically controlled head as claimed in claim 2 or 3, **characterized in that** the hydraulic motor (14) is adapted to cause a chainsaw (13) to rotate around a saw blade and is provided with an inlet port (21), an outlet port (22) and a drain port (27), the outlet port and the drain port are each connected via a non-return valve (24, 29) to the first pressure line (5a) and the drain port is provided with a first hydraulic accumulator (28).

5. Hydraulically controlled head as claimed in claim 4, **characterized in that** the head comprises a third hydraulic actuator (15) for causing the saw blade to move out of and into a saw casing (8).

6. Hydraulically controlled head as claimed in claim 5, **characterized in that** the outlet port is provided with a hydraulic throttle control valve (23) and the third hydraulic actuator (15) comprises a double-action hydraulic cylinder connected to the outlet port (22) of the hydraulic motor (14) and, via a second throttle non-return valve (23), to a second hydraulic accumulator (28).

7. Hydraulically controlled head as claimed in claim 6, **characterized in that** the head also comprises a hydraulic lubricant pump (30) for lubricating the saw blade, connected to the outlet port (22) of the hydraulic motor (14).

8. Hydraulically controlled head as claimed in claim 6 or 7, **characterized in that** the hydraulic head also comprises a hydraulic control unit (11) suitable for controlling the second hydraulic actuator (10), the third hydraulic actuator (15) and the hydraulic motor (14) and that at least the first sequencing valve (17), the second sequencing valve (18), the first throttle control valve (19), the throttle non-return valve (20), the first non-return valve (24) and the second non-return valve (29) are accommodated in a solid metal body forming part of the hydraulic control unit.

9. Hydraulically controlled head as claimed in claim 1, **characterized in that** the head also comprises an additional clamp (34a, 34b) provided with an additional hydraulic actuator (35a, 35b) for clamping round already harvested trees when a further tree is being sawn down.

10. Hydraulically controlled head as claimed in claim 9, **characterized in that** a first hydraulic sequencing valve (17) is received between the second hydraulic actuator (10) and the hydraulic valve (6) and a second hydraulic sequencing valve (18) is received between the hydraulic motor (14) plus the additional hydraulic actuator and the hydraulic valve (6).

11. Hydraulically controlled head as claimed in claim 10, **characterized in that** a connection to the hydraulic valve (6) comprises a first pressure line (5a) for opening the clamp (7) and a second pressure line (5b) for closing the clamp (7), that the first sequencing valve (17) is connected to the first pressure line (5a) and that the second sequencing valve (18) is connected to the second pressure line (5b).

12. Hydraulically controlled head as claimed in claim 11, **characterized in that** the outlet of the second sequencing valve (18) is connected to the hydraulic motor (14) and to an inlet of a hydraulic 3/2 valve (39) and a first connection of the additional hydraulic actuator is connected to an outlet of the hydraulic 3/2 valve (39).

13. Hydraulically controlled head as claimed in claim 12, **characterized in that** an outlet port (22) of the hydraulic motor (14) is provided with a hydraulic throttle control valve (38) and the outlet port of the hydraulic motor is connected to a hydraulically operated switch input of the hydraulic 3/2 valve (39).

14. Hydraulically controlled head as claimed in claims 12 or 13, **characterized in that** the additional hydraulic actuator comprises two sub-actuators (35a, 35b) connected in parallel for operating two jaw halves (34a, 34b) of the additional clamp.

15. Vehicle (1) provided with a hydraulically controlled head (2) as claimed in any of the claims 1 to 14.

## Patentansprüche

1. Hydraulisch kontrollierter Kopf (2) zum Ernten von Bäumen, umfassend eine Klemme (7), die um einen Baum angeordnet werden kann, und einen ersten Hydraulikaktuator (12), mit dem die Klemmvorrichtung geschlossen und wieder geöffnet werden kann, und ein doppelagierendes Hydraulikventil (6), mit dem der Kopf mit einer Hydraulikpumpeneinheit verbindbar ist, welche Teil eines Fahrzeuges (1) ist, mit dem der Kopf positionierbar ist, wobei der Kopf auch eine Kippvorrichtung (9), die mit einem zweiten Hydraulikaktuator (10) versehen ist und eine Säge (13), die mit einem Hydraulikmotor (14) versehen ist, umfasst, **dadurch gekennzeichnet, dass** ein erstes Hydrauliksequenzierventil (17) zwischen dem zweiten Hydraulikaktuator und dem Hydraulikventil aufgenommen ist und dass ein zweites Hydrauliksequenzierventil (18) zwischen dem Hydraulikmotor und dem Hydraulikventil aufgenommen ist.

2. Hydraulisch kontrollierter Kopf gemäß Anspruch 1, **dadurch gekennzeichnet, dass** eine Verbindung zu dem Hydraulikventil eine erste Hydraulikdruckleitung (5a) zum Öffnen der Klemme (7) und eine zweite Hydraulikdruckleitung (5b) zum Schließen der Klemme umfasst und dass das erste Hydrauliksequenzierventil (17) mit der ersten Hydraulikdruckleitung verbunden ist und dass das zweite Hydrauliksequenzierventil mit der zweiten Hydraulikdruckleitung verbunden ist.

3. Hydraulisch kontrollierter Kopf gemäß Anspruch 2, **dadurch gekennzeichnet, dass** der zweite Hydraulikaktuator (10) mit einem ersten Drosselrückschlagventil (20) versehen ist.

4. Hydraulisch kontrollierter Kopf gemäß Anspruch 2 oder 3, **dadurch gekennzeichnet, dass** der Hydraulikmotor (14) ausgebildet ist, um eine Kettensäge (13) um ein Sägeblatt rotieren zu lassen und mit einem Einlaßport (21), einem Auslaßport (22) und einem Ablaßport (27) versehen ist, wobei der Auslaßport (22) und der Ablaßport jeweils über ein Rückschlagventil (24, 29) mit der ersten Hydraulikdruckleitung (5a) verbunden sind und der Ablaßport mit einem ersten Hydrauliksammler (28) versehen ist.

5. Hydraulisch kontrollierter Kopf gemäß Anspruch 4, **dadurch gekennzeichnet, dass** der Kopf einen dritten Hydraulikaktuator (15) umfasst, um das Sägeblatt aus einem Sägegehäuse (8) auszufahren und in das Sägegehäuse (8) einzufahren.

6. Hydraulisch kontrollierter Kopf gemäß Anspruch 5, **dadurch gekennzeichnet, dass** der Auslassport mit einem hydraulischen Drosselkontrollventil (23) versehen ist und dass der dritte Hydraulikaktuator (15) einen doppelagierenden Hydraulikzylinder umfasst, der mit dem Auslassport (22) des Hydraulikmotors (14) verbunden ist und über ein zweites Drosselrückschlagventil (26) mit einem zweiten Hydrauliksammler (25) verbunden ist.

7. Hydraulisch kontrollierter Kopf gemäß Anspruch 6, **dadurch gekennzeichnet, dass** der Kopf weiterhin eine Hydraulikschmierpumpe (30) zum Schmieren des Sägeblattes umfasst, die mit dem Auslassport (22) des Hydraulikmotors (14) verbunden ist.

8. Hydraulisch kontrollierter Kopf gemäß Anspruch 6 oder 7, **dadurch gekennzeichnet, dass** der hydraulische Kopf weiterhin eine Hydraulikkontrolleinheit (11) umfasst, die geeignet ist, um den zweiten Hydraulikaktuator (10), den dritten Hydraulikaktuator Aktuator (15) und den Hydraulikmotor (14) zu kontrollieren und daß zumindest das erste Sequenzierventil (17), das zweite Sequenzierventil (18), und das erste Überdruckkontrollventil (19), das Drosselrückschlagventil (20), das erste Rückschlagventil (24) und das zweite Rückschlagventil (29) in einem stabilen Metallgehäuse angeordnet sind, der Teil der Hydraulikkontrolleinheit ist.

9. Hydraulisch kontrollierter Kopf gemäß Anspruch 1, **dadurch gekennzeichnet, dass** der Kopf weiterhin eine zusätzliche Klemmvorrichtung (34a, 34b) umfasst, die mit einem zusätzlichen Hydraulikaktuator (35a, 35b) zum Umklammern bereits gefällter Bäume während des Sägens eines weiteren Baumes versehen ist.

10. Hydraulisch kontrollierter Kopf gemäß Anspruch 9, **dadurch gekennzeichnet, dass** in ein erstes Hydrauliksequenzierventil (17) zwischen dem zweiten Hydraulikaktuator (10) und dem Hydraulikventil (6) aufgenommen ist und ein zweites Hydrauliksequenzierventil (18) zwischen dem Hydraulikmotor (14) mit dem zusätzlichen Hydraulikaktuator und dem Hydraulikventil (6) aufgenommen ist.

11. Hydraulisch kontrollierter Kopf gemäß Anspruch 10, **dadurch gekennzeichnet, dass** eine Verbindung zu dem Hydraulikventil (6) eine erste Druckleitung (5a) zum Öffnen der Klemmvorrichtung (7) und eine zweite Druckleitung (5b) zum Schließen der Klemmvorrichtung (7) umfasst, dass das erste Sequenzierventil (17) mit der ersten Druckleitung (5a) verbunden ist und dass das zweite Sequenzierventil (18) mit der zweiten Druckleitung (5b) verbunden ist.

12. Hydraulisch kontrollierter Kopf gemäß Anspruch 11, **dadurch gekennzeichnet, dass** der Auslass des zweiten Sequenzierventils (18) mit dem Hydraulikmotor (14) und einem Einlass eines 3/2-Hydraulikventils (39) verbunden ist und dass eine erste Verbindung des zusätzlichen Hydraulikaktuators mit einem Auslass des 3/2-Hydraulikventils (39) verbunden ist.

13. Hydraulisch kontrollierter Kopf gemäß Anspruch 12, **dadurch gekennzeichnet, dass** ein Auslassport (22) des Hydraulikmotors (14) mit einem hydraulischen Drosselkontrollventil (38) versehen ist und dass der Auslassport des Hydraulikmotors mit einem hydraulisch schaltbaren Eingang des 3/2-Hydraulikventils verbunden ist.

14. Hydraulisch kontrollierter Kopf gemäß Anspruch 12 oder 13, **dadurch gekennzeichnet, dass** der zusätzliche Hydraulikaktuator zwei Unteraktuatoren (35a, 35b) umfasst, die parallel geschaltet sind, um zwei Kieferhälften (34a, 34b) der zusätzlichen Klemmvorrichtung zu betätigen.

15. Fahrzeug (1) versehen mit einem hydraulisch kontrollierten Kopf (2) gemäß einem der Ansprüche 1 bis 14.

## Revendications

1. Tête à commande hydraulique (2) pour l'abattage d'arbres, comprenant une pince (7) pouvant être placée autour d'un arbre et un premier actionneur hydraulique (12) à l'aide duquel la pince peut être fermée et rouverte, et une soupape hydraulique à double action (6) à l'aide de laquelle la tête peut être reliée à une unité de pompe hydraulique qui fait partie d'un véhicule (1) permettant de positionner la tête, la tête comprenant également un dispositif de basculement (9) muni d'un deuxième actionneur hydraulique (10) et une scie (13) munie d'un moteur hydraulique (14), **caractérisée en ce qu**'une première soupape de séquence hydraulique (17) est reçue entre le deuxième actionneur hydraulique et la soupape hydraulique, et en ce qu'une deuxième soupape de séquence hydraulique (18) est reçue entre le moteur hydraulique et la soupape hydraulique.

2. Tête à commande hydraulique selon la revendication 1, **caractérisée en ce qu'**une connexion à la soupape hydraulique comprend une première ligne de pression (5a) pour ouvrir la pince (7) et une deuxième ligne de pression (5b) pour fermer la pince, **en ce que** la première soupape de séquence hydraulique (17) est raccordée à la première ligne de pression, et **en ce que** la deuxième soupape de séquence hydraulique (18) est raccordée à la deuxième ligne de pression.

3. Tête à commande hydraulique selon la revendication 2, **caractérisée en ce que** le deuxième actionneur hydraulique (10) est muni d'une première vanne papillon antiretour (20).

4. Tête à commande hydraulique selon la revendication 2 ou 3, **caractérisée en ce que** le moteur hydraulique (14) est apte à faire tourner une scie à chaîne (13) autour d'une lame de scie et est muni d'un port d'entrée (21), d'un port de sortie (22) et d'un port de drainage (27), le port de sortie et le port de drainage étant chacun connecté par le biais d'une valve antiretour (24, 29) à la première ligne de pression (5a) et le port de drainage étant muni d'un premier accumulateur hydraulique (28).

5. Tête à commande hydraulique selon la revendication 4, **caractérisée en ce que** la tête comprend un troisième actionneur hydraulique (15) pour faire sortir la lame de scie hors d'un boîtier de scie (8) et le faire rentrer dedans.

6. Tête à commande hydraulique selon la revendication 5, **caractérisée en ce que** le port de sortie est muni d'une vanne papillon hydraulique de contrôle (23) et **en ce que** le troisième actionneur hydraulique (15) comprend un cylindre hydraulique à double action qui est connecté au port de sortie (22) du moteur hydraulique (14) et à un deuxième accumulateur hydraulique (25) par le biais d'une deuxième vanne papillon antiretour (26).

7. Tête à commande hydraulique selon la revendication 6, **caractérisée en ce que** la tête comprend en outre une pompe hydraulique de lubrification (30) connectée au port de sortie (22) du moteur hydraulique (14) et destinée à lubrifier la lame de scie.

8. Tête à commande hydraulique selon la revendication 6 ou 7, **caractérisée en ce que** la tête hydraulique comprend en outre une unité de commande hydraulique (11) apte à commander le deuxième actionneur hydraulique (10), le troisième actionneur hydraulique (15) et le moteur hydraulique (14), et **en ce qu'**au moins la première soupape de séquence hydraulique (17), la deuxième soupape de séquence hydraulique (18), la première vanne papillon de contrôle (19), la vanne papillon antiretour (20), la première valve antiretour (24) et la deuxième valve antiretour (29) sont logés dans un boîtier métallique solide faisant partie de l'unité de contrôle hydraulique.

9. Tête à commande hydraulique selon la revendication 1, **caractérisée en ce que** la tête comprend en outre une pince supplémentaire (34a, 34b) qui est munie d'un actionneur hydraulique supplémentaire (35a, 35b) pour serrer des arbres déjà abattus lors du sciage d'un autre arbre.

10. Tête à commande hydraulique selon la revendication 9, **caractérisée en ce qu'une** première soupape de séquence hydraulique (17) est reçue entre le deuxième actionneur hydraulique (10) et la soupape hydraulique (6), et **en ce qu'**une deuxième soupape de séquence hydraulique (18) est reçue entre le moteur hydraulique (14) avec l'actionneur hydraulique supplémentaire et la soupape hydraulique (6).

11. Tête à commande hydraulique selon la revendication 10, **caractérisée en ce qu**'une connexion vers la soupape hydraulique (6) comprend une première ligne de pression (5a) pour ouvrir la pince (7) et une deuxième ligne de pression (5b) pour fermer la pince (7), en ce que la première soupape de séquence hydraulique (17) est connectée à la première ligne de pression (5a) et en ce que la deuxième soupape de séquence hydraulique (18) est reliée à la deuxième ligne de pression (5b).

12. Tête à commande hydraulique selon la revendication 11, **caractérisée en ce que** la sortie de la deuxième soupape de séquence hydraulique (18) est connectée au moteur hydraulique (14) et à une entrée d'une soupape hydraulique 3/2 (39) et **en ce qu'**une première connexion de l'actionneur hydraulique supplémentaire est connectée à une sortie de la soupape hydraulique 3/2 (39).

13. Tête à commande hydraulique selon la revendication 12, **caractérisée en ce qu'un** port de sortie (22) du moteur hydraulique (14) est muni d'une soupape papillon de commande hydraulique (38) et **en ce que** le port de sortie du moteur hydraulique est connecté à une entrée d'un commutateur à actionnement hydraulique de la soupape hydraulique 3/2 (39).

14. Tête à commande hydraulique selon les revendications 12 ou 13, **caractérisée en ce que** l'actionneur hydraulique supplémentaire comprend deux sous-actionneurs (35a, 35b) qui sont connectés en parallèle pour actionner deux moitiés de mâchoire (34a, 34b) de la pince supplémentaire.

15. Véhicule (1) muni d'une tête (2) à commande hydraulique selon l'une des revendications 1 à 14.
